# EUROPEAN PATENT APPLICATION

(11) **EP 4 745 727 A1**
(43) Date of publication of application: **20.05.2026**
(21) Application number: 25215421.6
(22) Date of filing: 13.11.2025
(51) Int. Cl.: G06F 3/02, G06F 3/01

(54) **ULTRA-SLIM HAPTIC KEYBOARD**

(30) Priority: 15.11.2024 KR 20240162881
(71) Applicant: Chung Ang University Industry Academic Cooperation Foundation, Seoul 06974 (KR)
(72) Inventor: CHOI, Seung Tae, 05501 Songpa-gu, Seoul (KR)
(74) Representative: Stöckeler, Ferdinand

(57) **Abstract**

An embodiment of the disclosure provides an ultra-slim haptic keyboard that implements a haptic feedback function in an extremely thin keyboard, thereby enhancing portability and click feel. The ultra-slim haptic keyboard includes a lower frame part, an upper frame part, a key cap part, an elastic support part, a flexible circuit board part, and a driving part. The lower frame part forms a lower body of the ultra-slim haptic keyboard. The upper frame part is provided at the upper side of the lower frame part, forming an upper body of the ultra-slim haptic keyboard, and has an open hole formed through a position corresponding to a key. The key cap part is inserted into the open hole. The elastic support part is provided such that the lower end part is fixed to the upper part of the lower frame part, and the upper end part supports the lower part of the key cap part, thereby elastically supporting the key cap part upward. The flexible circuit board part includes a flexible substrate part, which is installed between the lower and upper frame parts, and a sensor part, which is installed at the flexible substrate part and detects the pressing of the key cap part. The driving part is provided at the flexible substrate part, and vibrates to transmit the vibration to the key cap part, thereby providing haptic feedback to a user, when the sensor part detects the pressing of the key cap part.

## Description

### BACKGROUND

The disclosure relates to an ultra-slim haptic keyboard, and more particularly, to an ultra-slim haptic keyboard that implements a haptic feedback function in a very thin keyboard to improve portability and click feel.

A keyboard is a computer input device with keys arranged according to a set of rules, wherein pressing a key generates a corresponding signal to the computer.

Keyboards include a standard printable character set, a variety of non-standard or extended character sets, including those for various languages and special characters, and non-character keys.

Generally, keyboards can be broadly categorized into mechanical keyboards and membrane keyboards based on their switches. Mechanical keyboards offer a distinctly different typing feel and sound than membrane keyboards, but are are often thicker. Membrane keyboards can be thinner than mechanical keyboards, but often lack a pleasant click feel.

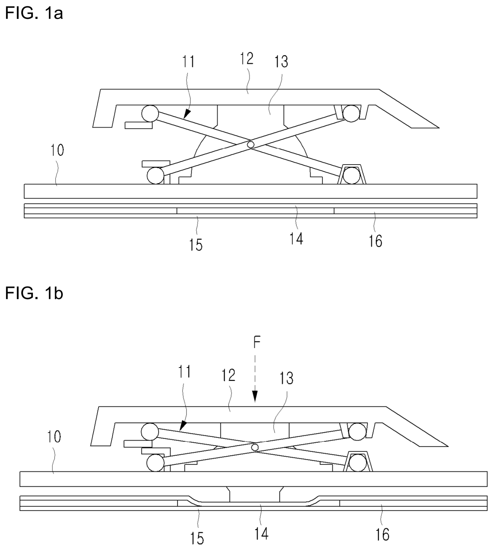

FIGS. 1a and 1b are an exemplary diagram illustrating a scissor-switch keyboard, which is most commonly used in laptops and other devices in a manner similar to a membrane keyboard.

As shown in FIGS. 1a and 1b, a conventional scissor-switch keyboard includes a scissor-shaped structure (11) on a frame (10), and a key cap (12) at the upper part of the structure (11). Furthermore, the key cap (12) is supported by a rubber dome (13). Meanwhile, an upper electrode (14) and a lower electrode (15) are arranged up and down apart from each other at the lower side of the frame (10), and the gap between the upper electrode (14) and the lower electrode (15) is maintained by a spacer (16). Then, when the user presses the key cap (12) and applies an external force (F), the rubber dome (13) pressed by the key cap (12) moves downward from the frame (10), pressing the upper electrode (14), so that the upper electrode (14) comes into contact with the lower electrode (15), forming a contact point and transmitting an electrical signal and this enables to detect pressing of the corresponding key. However, this method has limitations in minimizing the height of the scissor-shaped structure (11) and the rubber dome (13), thus limiting thinning of the overall thickness of the keyboard.

Meanwhile, electroactive polymers (EAPs) are lightweight, flexible, and capable of undergoing large deformations under electrical stimulation, making them promising materials sometimes referred to as artificial muscles that mimic biological muscles.

Furthermore, like many polymer materials, EAPs can be easily manufactured in various forms, attracting considerable interest as diverse sensors and actuators.

EAPs can be broadly divided into ionic EAPs and electronic EAPs. Of these, electronic EAPs exhibit fast response times because the Maxwell stress caused by an applied electric field induces deformation.

A representative example of electronic EAPs is relaxor ferroelectric polymers (RFPs). Relaxor ferroelectric polymers are attracting considerable attention because they can achieve large electrostrictive strain when an electric field is applied.

Typical relaxor ferroelectric polymers (RFPs) include P(VDF-TrFE-CFE) [poly(vinylidene fluoride-trifluoroethylene-chlorofluoroethylene)] and P(VDF-TrFE-CTFE) [poly(vinylidene fluoride-trifluoroethylene-chlorotrifluoroethylene)].

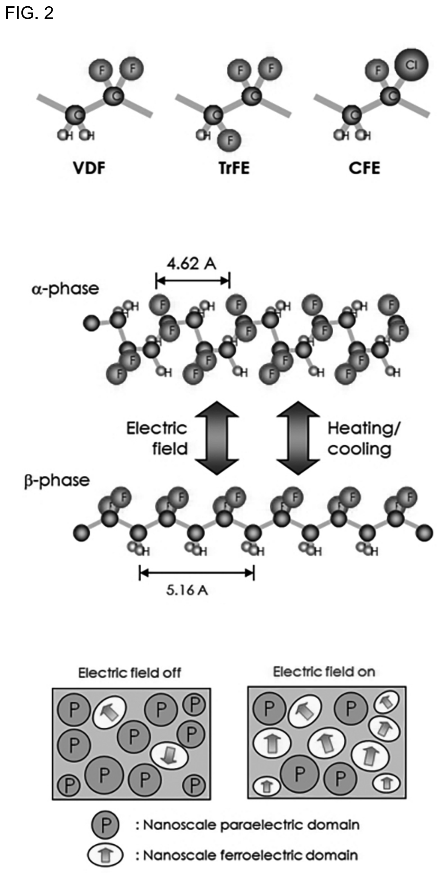

FIG. 2 illustrates a relaxed ferroelectric polymer and its operating mechanism.

Upper images of FIG. 2 shows three single molecules, VDF, TrFE, and CFE, that make up P(VDF-TrFE-CFE). Here, the third single molecule, CFE, introduces a defect into the arrangement of the ferroelectric polymer P(VDF-TrFE), as shown in middle images of FIG. 2, and this defect divides the coherent polarization region (all-trans chains) into nano-polarization regions (all-trans chains interrupted by trans and gauche bonds). These nano-polarization regions induce a phase transition under an electric field, inducing large strain, as shown in bottom images of FIG. 2.

An actuator utilizing RFP, which induces such large electrostrictive strain, can be implemented as a vibration actuator, and to implement a slim keyboard using this, a special structure and manufacturing technology are required to generate vibrations using the RFP actuator while maintaining a thinness and transmitting the vibrations to the user's fingertips.

### [Related art document]

### [Patent document]

Republic of Korea Patent Publication No. 10-2022-0147854 (published on November 4, 2022)
Republic of Korea Patent Registration No. 2354264 (announced on January 21, 2022)

### SUMMARY

An aspect of the disclosure is to provide an ultra-slim haptic keyboard with improved portability and click feel by implementing haptic feedback functionality in a very thin keyboard.

The aspect of the disclosure is not limited to that mentioned above, and other aspects not mentioned will be clearly understood by those skilled in the art from the description below.

An embodiment of the disclosure provides an ultra-slim haptic keyboard, including: a lower frame part forming a lower body of the ultra-slim haptic keyboard; an upper frame part provided at the upper side of the lower frame part to form an upper body of the ultra-slim haptic keyboard and having an open hole formed through the upper frame part at a position corresponding to a key; a key cap part inserted into the open hole; an elastic support part having a lower end part fixed to the upper part of the lower frame part and an upper end part provided to support the lower part of the key cap part and elastically support the key cap part upward; a flexible circuit board part having a flexible substrate part provided between the lower frame part and the upper frame part, and a sensor part provided at the flexible substrate part to detect a pressing of the key cap part; and a driving part provided at the flexible substrate part, and providing haptic feedback to a user by vibrating and transmitting vibration to the key cap part when the sensor part detects that the key cap part is pressed.

In an embodiment of the disclosure, the key cap part may include: a body part provided to cover the open hole; a prevention piece formed protrudingly on a side surface of the body part and inserted into a catch groove formed recessedly on a side surface lower part of the open hole to prevent the body part from being separated from the upper side of the open hole; and a contact part formed protrudingly at the lower center of the body part.

In an embodiment of the disclosure, the flexible substrate part may include: a vibrating part integrated with the driving part and vibrating up and down together with the driving part; and an open part formed through opposite sides of the vibrating part to correspond to the open hole and induces the driving part and the vibrating part to vibrate up and down.

In an embodiment of the disclosure, the sensor part may include: a circuit electrode including a first electrode provided at the upper part of the vibrating part and a second electrode spaced apart from the first electrode and opposite to the first electrode; and a connection electrode provided at the lower part of the contact part, and contacting, when the contact part moves downward, the first electrode and the second electrode to electrically connect the first electrode and the second electrode.

In an embodiment of the disclosure, the flexible substrate part may include: a vibrating part integrated with the driving part provided at the upper part, and vibrating up and down together with the driving part; an open part formed through opposite sides of the vibrating part to correspond to the open hole and induces the driving part and the vibrating part to vibrate up and down; and a protective layer part provided at the upper part of the driving part to cover the driving part and vibrating up and down together with the driving part and the vibrating part.

In an embodiment of the disclosure, the flexible substrate part may include: a first substrate layer above which the driving part is provided; a second substrate layer provided spaced apart from the lower side of the first substrate layer; and a spacer provided between the first substrate layer and the second substrate layer so that a gap between the first substrate layer and the second substrate layer is maintained, and a spacing space is formed between the first substrate layer and the second substrate layer at a vertically lower side of the driving part.

In an embodiment of the disclosure, the sensor part may include: a first circuit electrode provided at the lower part of the first substrate layer and extending into the spacing space; and a second circuit electrode provided at the upper part of the second substrate layer, extending into the spacing space, and electrically connected to the first circuit electrode by contacting the first circuit electrode when the contact part moves downward.

In an embodiment of the disclosure, the sensor part may include: a circuit electrode provided at the upper part of the second substrate layer, extending into the spacing space, and having a disconnected part that is partially unconnected in the spacing space; and a connection electrode provided at the lower part of the first substrate layer in the spacing space and electrically connecting the disconnected part when the contact part moves downward.

In an embodiment of the disclosure, the flexible substrate part may include: a vibrating part integrated with the driving part provided at the lower part, and vibrating up and down together with the driving part; an open part formed through opposite sides of the vibrating part to correspond to the open hole and induces the driving part and the vibrating part to vibrate up and down; and a protective layer part provided at the lower part of the vibrating part to cover the driving part and vibrate up and down together with the driving part and the vibrating part.

In an embodiment of the disclosure, the flexible substrate part may include: a first substrate layer having the driving part provided at the lower part; a second substrate layer provided spaced apart from the lower side of the first substrate layer; and a spacer provided between the first substrate layer and the second substrate layer so that a gap between the first substrate layer and the second substrate layer is maintained, and a spacing space is formed between the protective layer part and the second substrate layer at a vertically lower side of the driving part, and the sensor part may include: a circuit electrode provided at the upper part of the second substrate layer, extending into the spacing space, and having a disconnected part that is partially unconnected in the spacing space; and a connection electrode provided at the lower part of the protective layer part in the spacing space, and electrically connecting the disconnected part when the contact part moves downward.

In an embodiment of the disclosure, when a voltage is applied, the driving part may undergo electrostrictive deformation, shrinking in the thickness direction and expanding in the plane direction, and when a voltage is not applied, it may be restored to its initial shape.

In an embodiment of the disclosure, when a voltage is applied to the driving part and the driving part expands and deforms in the plane direction, the vibrating part may be bent and deformed by the driving part that is expanded and deformed, and when a voltage is applied repeatedly, the driving part and the vibrating part may vibrate while repeatedly undergoing expansion deformation and restoration to their initial shape.

In an embodiment of the disclosure, the driving part may include: a laminated part which has a flexible base material, driving electrode layers deposited on the base material, and a relaxor ferroelectric polymer (RFP) layer provided on the driving electrode layer, and in which the driving electrode layer and the relaxor ferroelectric polymer layer are alternately laminated; and an interlayer electrical connection part which is provided at a part of the laminated part, electrically connecting the plurality of driving electrode layers, and to which a voltage is applied.

In an embodiment of the disclosure, a cavity may be formed recessedly at the upper part of the lower frame part to provide a safety space to prevent the driving part from being pressed and compressed when the vibrating part and the driving part are bent and deformed downward by being pressed by the key cap part.

In an embodiment of the disclosure, the cavity may be formed with a width wider than the width of the vibrating part so that the vibrating part, which is bent and deformed downward, is inserted into the safety space without being caught by the lower frame.

In an embodiment of the disclosure, the elastic support part may be provided at the open part.

In an embodiment of the disclosure, the maximum compression length of the elastic support part may be less than the depth of the cavity.

In an embodiment of the disclosure, the cross-sectional shape of the contact part perpendicular to the width direction of the contact part may be uniform, and the cross-sectional shape of the contact part perpendicular to the length direction of the contact part may have a convex curve.

According to an embodiment of the disclosure, a driving part is provided at a flexible substrate part and can be connected to a sensor part via a circuit; when the sensor part detects that a key cap part is pressed, the driving part vibrates, transmitting the vibration to the key cap part, thereby providing haptic feedback to a user, thereby providing a click sensation.

Furthermore, according to an embodiment of the disclosure, an ultra-slim haptic keyboard can be slimmed down to approximately 3 mm while still providing an excellent click sensation. Considering that a keyboard-type book cover for a typical tablet PC is currently approximately 7 mm to 10 mm thick, this has the effect of making the keyboard more than half as thin.

The effects of the disclosure are not limited to the effects described above, and should be understood to include all effects that are inferable from the configuration of the disclosure described in the detailed description or claims of the disclosure.

### BRIEF DESCRIPTION OF THE DRAWINGS

The above and other aspects, features, and advantages of certain embodiments of the disclosure will be more apparent from the following description taken in conjunction with the accompanying drawings, in which:
FIGS. 1a and 1b are an exemplary diagram illustrating a scissor-switch keyboard, which is most commonly used in laptops and other devices in a manner similar to a membrane keyboard;
FIG. 2 illustrates a relaxed ferroelectric polymer and its operating mechanism;
FIG. 3 is an exemplary plan view illustrating an ultra-slim haptic keyboard according to a first embodiment of the disclosure;
FIGS. 4a and 4b are an exemplary diagram illustrating an upper frame part of an ultra-slim haptic keyboard according to a first embodiment of the disclosure;
FIGS. 5a and 5b are an exemplary diagram illustrating a key cap part of an ultra-slim haptic keyboard according to a first embodiment of the disclosure;
FIGS. 6a and 6b are an exemplary diagram illustrating a lower frame part of an ultra-slim haptic keyboard according to a first embodiment of the disclosure;
FIG. 7 is an exemplary plan view illustrating a key cap part positioned at an open hole of an upper frame part of an ultra-slim haptic keyboard according to a first embodiment of the disclosure;
FIG. 8 is an exemplary plan view illustrating the arrangement of a key cap part, flexible circuit board part, driving part, and cavity in an ultra-slim haptic keyboard according to a first embodiment of the disclosure;
FIG. 9 is a cross-sectional view illustrating an ultra-slim haptic keyboard according to a first embodiment of the disclosure;
FIGS. 10a, 10b, 10c and 10b are an exemplary plan view illustrating a circuit electrode and connection electrode of a sensor part in an ultra-slim haptic keyboard according to a first embodiment of the disclosure;
FIGS. 11a and 11b are a cross-sectional view illustrating an example of an operation of a sensor part using a key cap part and elastic support part in FIG. 9;
FIG. 12 is a cross-sectional view illustrating a driving part of an ultra-slim haptic keyboard according to a first embodiment of the disclosure;
FIGS. 13a and 13b are a cross-sectional view illustrating the structure of a driving part and vibrating part of an ultra-slim haptic keyboard according to a first embodiment of the disclosure;
FIG. 14 is a graph showing the deformation of an elastic support part and the vibration generation of a driving part of an ultra-slim haptic keyboard according to a first embodiment of the disclosure;
FIG. 15 is a cross-sectional view illustrating an ultra-slim haptic keyboard according to a second embodiment of the disclosure;
FIG. 16 is a cross-sectional view illustrating an ultra-slim haptic keyboard according to a third embodiment of the disclosure; and
FIG. 17 is a cross-sectional view illustrating an ultra-slim haptic keyboard according to a fourth embodiment of the disclosure.

### DETAILED DESCRIPTION

Hereinafter, the disclosure will be described with reference to the accompanying drawings. However, the disclosure may be implemented in various different forms and therefore is not limited to the embodiments described herein. In addition, in order to clearly describe the disclosure in the drawings, parts that are not related to the description are omitted, and similar parts are given similar drawing reference numerals throughout the specification.

In the entire specification, when a part is said to be "connected (linked, contacted, coupled)" to another part, this includes not only the case where it is "directly connected" but also the case where it is "indirectly connected" with another member in between. In addition, when a part is said to "include" a component, this does not mean that it excludes other components, unless otherwise specifically stated, but rather that it may include other components.

The terms used in this specification are used only to describe specific embodiments and are not intended to limit the disclosure. The singular expression includes the plural expression unless the context clearly indicates otherwise. In this specification, the terms "include" or "have" are intended to specify the presence of a feature, number, step, operation, component, part, or combination thereof described in the specification, but should be understood as not excluding in advance the possibility of the presence or addition of one or more other features, numbers, steps, operations, components, parts, or combinations thereof.

Hereinafter, embodiments of the disclosure will be described in detail with reference to the accompanying drawings.

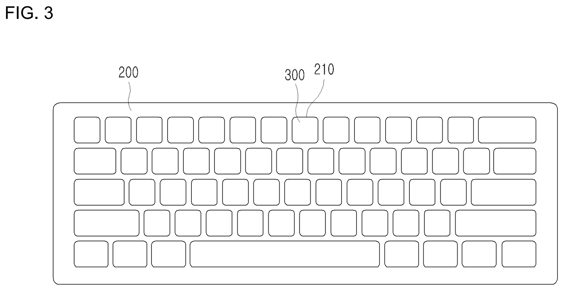

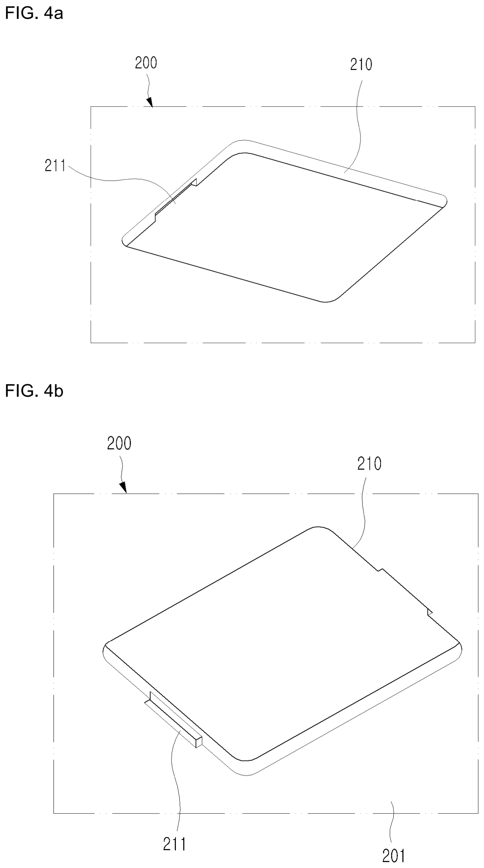

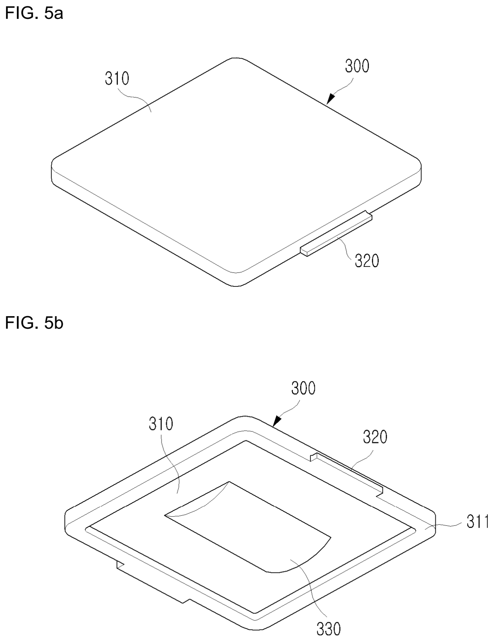

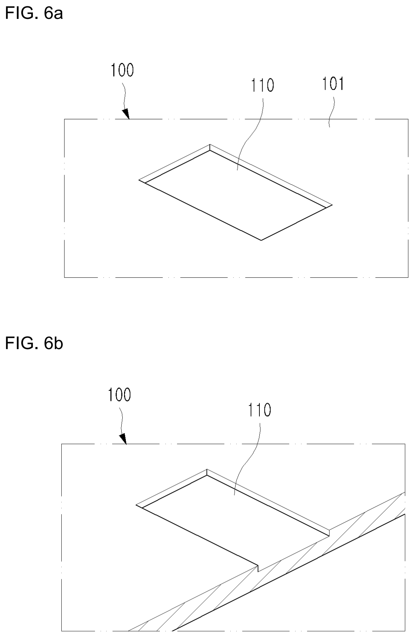

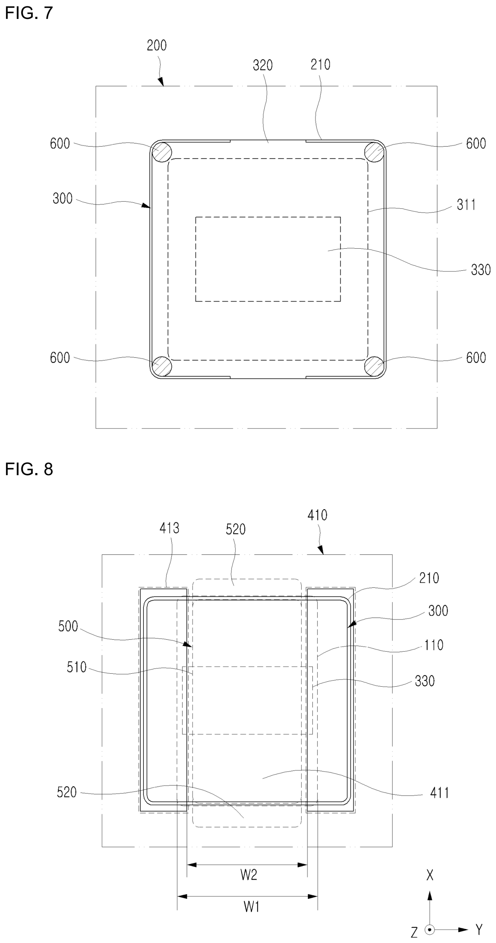

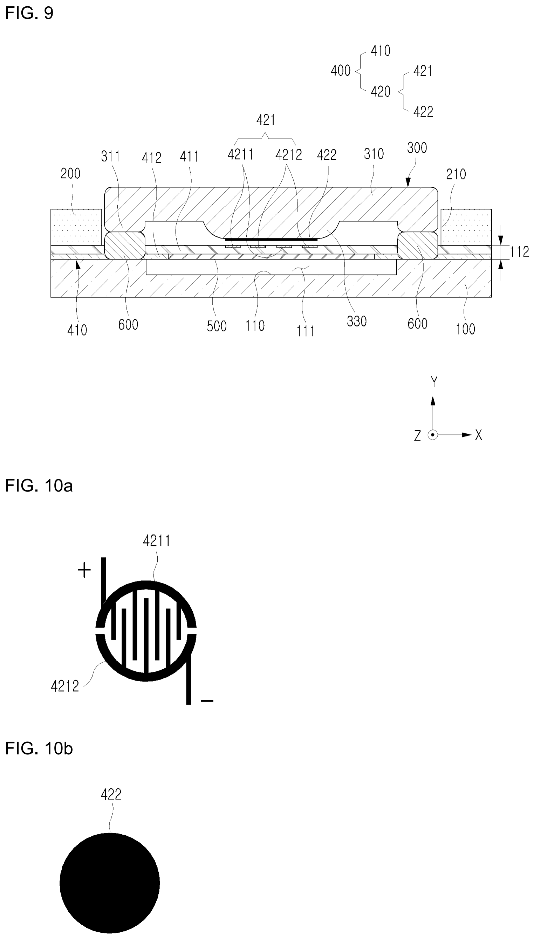

FIG. 3 is an exemplary plan view illustrating an ultra-slim haptic keyboard according to a first embodiment of the disclosure, FIGS. 4a and 4b are an exemplary diagram illustrating an upper frame part of an ultra-slim haptic keyboard according to a first embodiment of the disclosure, FIGS. 5a and 5b are an exemplary diagram illustrating a key cap part of an ultra-slim haptic keyboard according to a first embodiment of the disclosure, FIGS. 6a and 6b are an exemplary diagram illustrating a lower frame part of an ultra-slim haptic keyboard according to a first embodiment of the disclosure, FIG. 7 is an exemplary plan view illustrating a key cap part positioned at an open hole of an upper frame part of an ultra-slim haptic keyboard according to a first embodiment of the disclosure, FIG. 8 is an exemplary plan view illustrating the arrangement of a key cap part, flexible circuit board part, driving part, and cavity in an ultra-slim haptic keyboard according to a first embodiment of the disclosure, and FIG. 9 is a cross-sectional view illustrating an ultra-slim haptic keyboard according to a first embodiment of the disclosure.

As shown in FIGS. 3 through 9, the ultra-slim haptic keyboard may include a lower frame part (100), an upper frame part (200), a key cap part (300), a flexible circuit board part (400), a driving part (500), and an elastic support part (600).

The lower frame part (100) may form the lower body of the ultra-slim haptic keyboard. A cavity (110) may be formed recessedly into an upper part (101) of the lower frame part (100) (see FIGS. 6a and 6b). The cavity (110) will be described later.

The upper frame part (200) is provided at the upper side of the lower frame part (100) to form the upper body of the ultra-slim haptic keyboard, and may have an open hole (210) formed through a posititon corresponding to a key. Additionally, the upper frame part (200) may have a catch groove (211). The catch groove (211) may be formed recessedly into an inner surface lower part of the open hole (210) and may be formed as a pair facing one another (see FIGS. 4a and 4b).

The key cap part (300) may be inserted into the open hole (210). The key cap part (300) may include a body part (310), a prevention piece (320), and a contact part (330).

The body part (310) may form the body of the key cap part (300) and may be inserted into the open hole (210) to cover it. The body part (310) may be the part pressed by the user's finger.

The prevention piece (320) may be formed protruding from the side of the body part (310) and inserted into the catch groove (211) to prevent the body part (310) from being separated from the upper part of the open hole (210).

The contact part (330) may be formed protruding downward from the lower center of the body part (310) and may extend in a unidirectional length direction. The lower end part of the contact part (330) is preferably convex, as shown in FIG. 5b, but is not necessarily limited thereto; this may also be formed flat, as shown in FIG. 9.

The cross-sectional shape of the contact part (330) perpendicular to the width direction of the contact part (330) is uniform, and the cross-sectional shape of the contact part (330) perpendicular to the length direction of the contact part (330) may have a convex curve. Here, the width direction of the contact part (330) is a direction perpendicular to the length direction of the contact part (330).

As a specific example, the cross-sectional shape of the contact part (330) perpendicular to the width direction of the contact part (330) may be formed as a constant rectangle, and the cross-sectional shape of the contact part (330) perpendicular to the length direction of the contact part (330) may have an outwardly convex curved shape.

The key cap part (300) may have an edge part (311). The edge part (311) may protrude downward along the lower edge of the body part (310).

The elastic support part (600) may be provided such that the lower end part is fixed to the upper part of the lower frame part (100) and the upper end part supports the edge part (311), thereby elastically supporting the key cap part (300) upward.

The flexible circuit board part (400) may be provided between the lower frame part (100) and the upper frame part (200). Preferably, a single flexible circuit board part (400) may be provided with multiple keys. For convenience, the following description focuses on a single key, but the description below can be applied equally to other keys.

The flexible circuit board part (400) may include a flexible substrate part (410) and a sensor part (420) provided at the flexible substrate part (410) to detect the pressing of the key cap part (300).

Furthermore, the flexible substrate part (410) may include a vibrating part (411) and an opening part (413).

Here, the vibrating part (411) may be a part of the flexible substrate part (410) that is integrated with the driving part (500) and vibrates up and down together with the driving part (500). The driving part (500) may be provided at the lower part of the flexible substrate part (410), and may be integrated with the vibrating part (411) by being unimorphed. The vibration of the driving part (500) and the vibrating part (411) will be described later.

The open part (413) may be formed through opposite sides of the vibrating part (411) to correspond to the open hole (210). That is, the open part (413) may be a part formed through opposite sides of the vibrating part (411) along the length direction at the flexible substrate part (410).

The open part (413) allows the vibrating part (411) to be connected at opposite end parts in the length direction to the flexible substrate part (410). In this way, when the driving part (500), described later, expands in the plane direction, the vibrating part (411) is not restricted from expanding in the width direction. Then, the driving part (500) undergoes bending deformation along the length direction of the vibrating part (411), allowing both the driving part (500) and the vibrating part (411) to vibrate stably in the up and down direction. In this way, the open part (413) can induce the driving part (500) and the vibrating part (411) to vibrate more stably in the up and down direction (z-direction) through bending deformation.

Furthermore, the sensor part (420) may have a circuit electrode (421) and a connection electrode (422).

The circuit electrode (421) may be composed of a first electrode (4211) provided at the upper part of the vibrating part (411), and a second electrode (4212) spaced apart from the first electrode (4211) and positioned opposite the first electrode (4211).

In addition, the connection electrode (422) is provided at the lower part of the contact part (330), and when the contact part (330) moves downward, it simultaneously contacts the first electrode (4211) and the second electrode (4212), thereby electrically connecting the first electrode (4211) and the second electrode (4212).

When the circuit electrode (421) is connected by the connection electrode (422), an electrical signal may flow, thereby implementing the function of the key of the pressed key cap part (300).

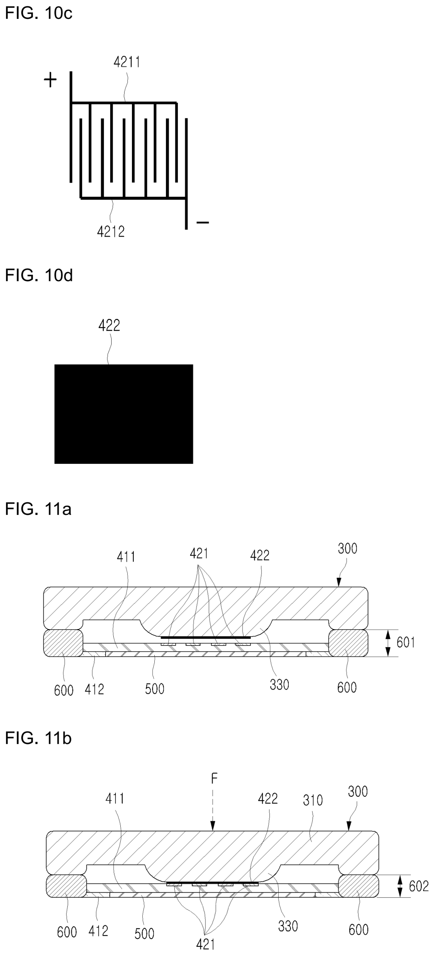

FIGS. 10a, 10b, 10c and 10b are an exemplary plan view illustrating a circuit electrode and connection electrode of a sensor part in an ultra-slim haptic keyboard according to a first embodiment of the disclosure.

As shown in FIGS. 10a, 10b, 10c and 10b, the first electrode (4211) may be a positive electrode, and the second electrode (4212) may be a negative electrode. The first electrode (4211) and the second electrode (4212) may be separated from each other and in a disconnected state.

The first electrode (4211) and the second electrode (4212) may be formed as lines and have a circular shape, and in this case, the connection electrode (422) may have a circular surface shape (see FIGS. 10a and 10b).

Alternatively, the first electrode (4211) and the second electrode (4212) may be formed as lines and have a rectangular shape, and in this case, the connection electrode (422) may have a rectangular surface shape (see FIGS. 10c and 10d).

FIGS. 11a and 11b are a cross-sectional view illustrating an example of an operation of a sensor part using a key cap part and elastic support part in FIG. 9.

As shown in FIGS. 9, 11a and 11b, the elastic support part (600) is attached to the open part (413, see FIG. 8), wherein the lower end part is fixed to the upper part of the lower frame part (100), and the upper end part is provided to support the lower corner of the key cap part (300), thereby elastically supporting the key cap part (300) upward.

When an external force (F) is applied to the key cap part (300), the elastic support part (600) undergoes compressive deformation, causing the key cap part (300) to move downward; the contact part (330), which protrudes from the lower center of the body part (310), moves downward, allowing the connection electrode (422) to contact the circuit electrode (421). When the elastic support part (600) undergoes compressive deformation, the key cap part (300) may be stroked downward.

Accordingly, the rubber dome configuration used in conventional keyboards can be omitted.

Meanwhile, as shown in FIGS. 6a, 6b, 8, and 9, a cavity (110) may be formed at the upper part of the lower frame part (100) to form a cavity (110) recessed to provide a safety space (111) to prevent the driving part (500) from being pressed and compressed when the vibrating part (411) and the driving part (500) are bent and deformed downward by being pressed by the key cap part (300). When the vibrating part (411) and the driving part (500) are inserted into the safety space (111) of the cavity (110) during downward bending, the lower part of the driving part (500) is separated from the upper part of the cavity (110), and this prevents pressure from being applied to the lower part of the driving part (500), thereby preventing damage to the driving part (500).

Furthermore, the width (W1) of the cavity (110) may be formed wider than the width (W2) of the vibrating part (411). This allows the vibrating part (411) to be inserted into the safety space (111) without being caught by the lower frame part (100) when it is bent downward.

Furthermore, the width (W1) of the cavity (110) may be formed wider than the width of the contact part (330). This allows the contact part (330) and the vibrating part (411) to be inserted into the safety space (111) without being caught by the lower frame part (100) when the contact part (330) presses the vibrating part (411) and the vibrating part (411) is bent downward.

Furthermore, the driving part (500) is provided at the flexible substrate part (410) and may be connected to the sensor part (420) via a circuit. When the sensor part (420) detects that the key cap part (300) is pressed, i.e., senses a key input, the driving part (500) vibrates and transmits the vibration to the key cap part (300), thereby providing haptic feedback to the user and providing a click sensation.

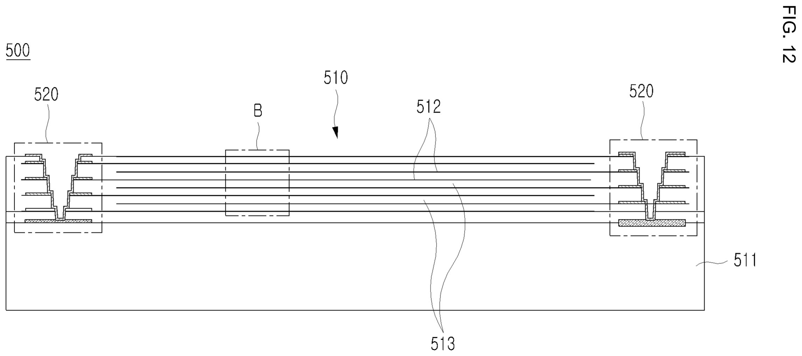

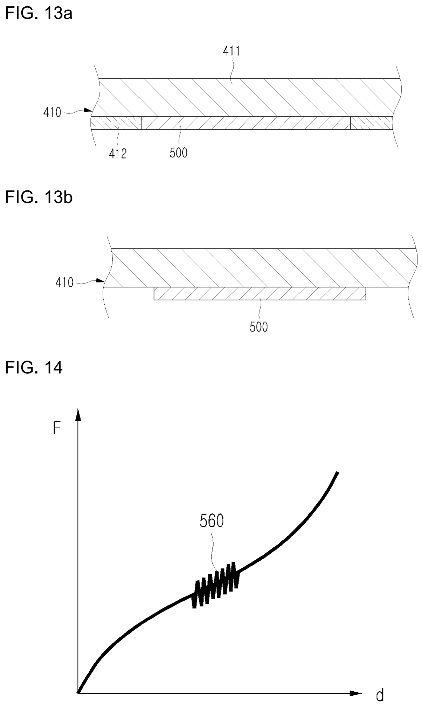

Specifically, FIG. 12 is a cross-sectional view illustrating a driving part of an ultra-slim haptic keyboard according to a first embodiment of the disclosure, and FIG. 13 is a cross-sectional view illustrating the structure of a driving part and vibrating part of an ultra-slim haptic keyboard according to a first embodiment of the disclosure.

As shown in FIGS. 12, 13a and 13b, the driving part (500) may be a relaxor ferroelectric polymer actuator and may include a laminated part (510) and an interlayer electrical connection part (520).

The laminated part (510) may include a base material (511), a driving electrode layer (512), and a relaxor ferroelectric polymer (RFP) layer (513).

The base material (511) may be formed of a flexible material. The base material (511) may be provided separately or may be a flexible substrate part (410).

Furthermore, the driving electrode layer (512) may be deposited on the base material (511).

The relaxor ferroelectric polymer layer (513) may be formed on the driving electrode layer (512).

The driving electrode layer (512) and the relaxed ferroelectric polymer layer (513) may be laminated alternately.

Furthermore, the driving electrode layer (512) may include a positive electrode layer and a negative electrode layer, and the positive and negative electrode layers may be alternately positioned between the relaxed ferroelectric polymer layers (513).

Additionally, an interlayer electrical connection part (520) may be provided at a part of the laminated part (510), electrically connecting a plurality of driving electrode layers (512) and allowing a voltage to be applied.

When a voltage is applied through the interlayer electrical connection part (520) and an electric field is applied to a pair of electrodes positioned at the upper and lower parts of the relaxed ferroelectric polymer layer (513), electrostrictive deformation occurs in the relaxed ferroelectric polymer layer. This electrostrictive deformation causes contraction in the direction of the electric field, and expansion in the direction perpendicular to the electric field due to the Poisson effect. That is, the laminated part (510) contracts in the thickness direction and expands in the plane direction.

Polyvinylidene fluoride-based (PVDF-based) relaxorative ferroelectric polymers may generate strains of approximately 5-7% under electric fields of 150 V/*µ*m. For example, when the relaxorative polymer film is 10 *µ*m thick, a driving voltage of approximately 400-600 V is required to generate a 1% strain.

However, by thinning the relaxorative ferroelectric polymer layer (513) and stacking multiple layers, as in the disclosure, the driving voltage can be reduced and a strong vibration level sufficient to provide a sufficient click sensation can be achieved.

Meanwhile, as described above, the driving part (500) may be bonded to the flexible substrate part (410) to form a unimorph structure with the vibrating part (411). In other words, the driving part (500) and the vibrating part (411) may form a unimorph actuator.

Therefore, when an electric field is applied and the relaxed ferroelectric polymer layer (513) attempts to expand in the plane direction, the flexible substrate part (410) inactive in the plane direction does not attempt to deform, and consequently, the driving part (500) and the unimorphed part of the driving part (500) at the flexible substrate part (410) experience bending deformation.

In particular, the open part (413) formed at opposite lenth direction sides of the driving part (500) prevents the plane direction expansion of the driving part (500) from being constrained by the open part (413); therefore, the unimorph actuator may undergo bending deformation in the XZ plane.

Furthermore, when no voltage is applied, the electric field is removed, and the relaxed ferroelectric polymer layer (513) may return to its initial shape.

Therefore, when a voltage is repeatedly applied, the driving part (500) and vibrating part (411) may vibrate up and down in the XZ plane, repeatedly undergoing expansion deformation and restoration to their initial shapes.

Furthermore, if the applied electric field has a frequency of preferably 150 Hz to 300 Hz, it may effectively stimulate the Pacinian Corpuscle, the tactile cells of the fingertip pressing the key cap part (300), even with small amplitudes.

Preferably, if the natural frequency of the Unimorph Actuator is designed to be around the driving frequency of the driving part (500), 150 Hz to 300 Hz, it may generate large vibrations through resonance.

Meanwhile, the elastic support part (600) elastically supports the key cap part (300) upward and, when the key cap part (300) is pressed by an external force, it is compressed, thereby causing the key cap part (300) to move downward.

As shown in FIG. 13a, if the driving part (500) is formed on the surface of the vibrating part (411) using a lamination method, a coating layer (412) may be formed around the driving part (500). That is, in this case, the flexible substrate part (410) may further include a coating layer (412).

Furthermore, as shown in FIG. 13b, if the driving part (500) is formed on the surface of the vibrating part (411) using a printing method, only the driving part (500) may be formed without the coating layer (412).

For convenience of explanation, FIGS. 9, 11, 15, 16, and 17 illustrate cases where the driving part (500) is formed using a lamination method.

FIG. 14 is a graph showing the deformation of an elastic support part and the vibration generation of a driving part of an ultra-slim haptic keyboard according to a first embodiment of the disclosure.

As shown in FIG. 14, as the external force (F) pressing on the key cap part (300) increases, the elastic support part (600) undergoes compressive deformation, resulting in an increase in displacement (d). Furthermore, as the deformation (stroke) section of the elastic support part (600) increases, causing the connection electrode (422) of the contact part (330) to contact the circuit electrode (421), vibration (560) may occur in the driving part (500).

Since the elastic support part (600) is provided, the key cap part (300) may be formed from a material that does not deform.

Furthermore, the maximum compression length of the elastic support part (600) may be the difference between the initial height (601) of the elastic support part (600) and the height (602) after it is fully compressed, and this height is preferably less than the depth (112) of the cavity (110). To ensure this, the gap between the lowermost end part of the edge part (311) of the key cap part (300) and the upper part of the lower frame (100) is preferably designed to be smaller than the maximum deformation height of the elastic support part (600). Thus, when the contact part (330) moves downward, bringing the connection electrode (422) into contact with the circuit electrode (421), and the driving part (500) and vibrating part (411) vibrate, the lower part of the driving part (500) will not be pressed against the bottom surface of the cavity (110), preventing damage to the driving part (500).

According to the disclosure, an ultra-slim haptic keyboard may be slimmed down to approximately 3 mm while still providing an excellent click response. Considering that a keyboard-type book cover for a typical tablet PC is currently approximately 7 mm to 10 mm thick, this has the effect of making the keyboard more than half as thin.

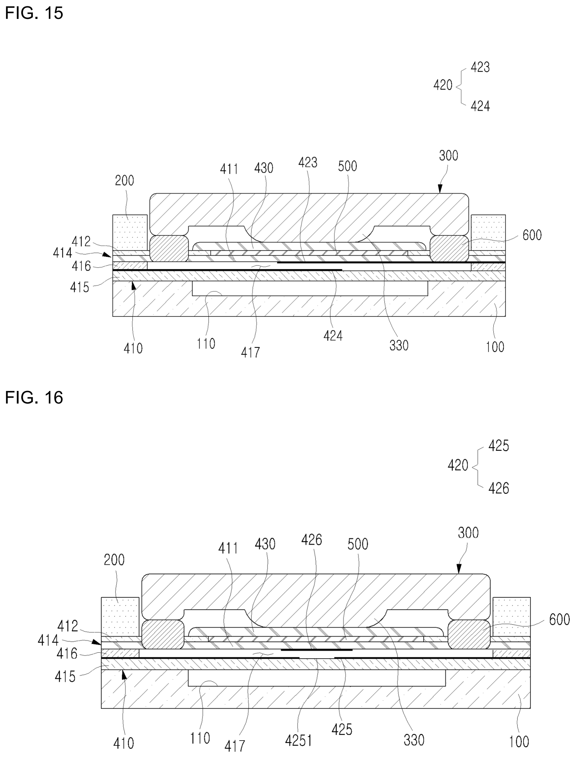

FIG. 15 is a cross-sectional view illustrating an ultra-slim haptic keyboard according to a second embodiment of the disclosure. In this embodiment, the configuration of the flexible substrate part (410) and the sensor part (420) may differ from those of the first embodiment described above, and other basic configurations may be identical to those of the first embodiment. For convenience of explanation, repetitive details will be omitted as much as possible.

As shown in FIG. 15, in the ultra-slim haptic keyboard according to this embodiment, the configurations of the lower frame part (100), upper frame part (200), and key cap part (300) may be identical to those of the first embodiment described above.

However, in this embodiment, the driving part (500) may be provided at the upper part of the vibrating part (411) and integrated with it.

Furthermore, the flexible substrate part (410) may further include a protective layer part (430).

The protective layer part (430) may be provided at the upper part of the driving part (500) to cover the driving part (500) and may vibrate in the up and down direction together with the driving part (500) and the vibrating part (411). The protective layer part (430) may be formed of an elastic polymer that is easily deformed and has a low elastic modulus.

The flexible substrate part (410) may include a first substrate layer (414), a second substrate layer (415), and a spacer (416).

The first substrate layer (414) may be a part that forms the upper layer of the flexible substrate part (410), and the driving part (500) may be provided at the upper part of the first substrate layer (414).

Here, the first substrate layer (414) may include a plurality of vibrating parts (411) formed at positions respectively corresponding to the plurality of key cap parts (300); if the driving part (500) is formed using a lamination method, the first substrate layer (414) may include a coating layer (412).

The second substrate layer (415) may be provided at the lower side of the first substrate layer (414) and may form the lower layer of the flexible substrate part (410).

Additionally, a spacer (416) may be provided between the first substrate layer (414) and the second substrate layer (415) to maintain a gap between the first substrate layer (414) and the second substrate layer (415), while a spacing space (417) may be formed between the first substrate layer (414) and the second substrate layer (415) at a vertically lower side of the driving part (500).

The sensor part (420) may include a first circuit electrode (423) and a second circuit electrode (424).

The first circuit electrode (423) may be provided at the lower part of the first substrate layer (414) and may extend into the spacing space (417).

Furthermore, the second circuit electrode (424) may be provided at the upper part of the second substrate layer (415) and may extend into the spacing space (417), and when the contact part (330) moves downward, it may contact the first circuit electrode (423) and be electrically connected to the first circuit electrode (423).

According to this embodiment, only when a certain force is applied to the key cap part (300) to ensure that the first circuit electrode (423) and the second circuit electrode (424) contact each other, a key press can be recognized.

In addition, since the driving part (500) is provided at the upper part of the first substrate layer (414) and directly contacts the key cap part (300) through the protective layer part (430), vibration can be transmitted to the key cap part (300) more effectively.

FIG. 16 is a cross-sectional view illustrating an ultra-slim haptic keyboard according to a third embodiment of the disclosure. In this embodiment, the configuration of the sensor part (420) may differ from that of the second embodiment described above, while other basic configurations may be identical to those of the second embodiment. For convenience of explanation, repetitive details will be omitted as much as possible.

As shown in FIG. 16, in the ultra-slim haptic keyboard according to this embodiment, a sensor part (420) may include a circuit electrode (425) and a connection electrode (426).

The circuit electrode (425) may be provided at the upper part of the second substrate layer (415) and extend into the spacing space (417), but may include a disconnected part (4251) that is partially unconnected from the spacing space (417).

The connection electrode (426) may be provided at the lower part of the first substrate layer (414) in the spacing space (417), and electrically connect the disconnected part (4251) when the contact part (330) moves downward.

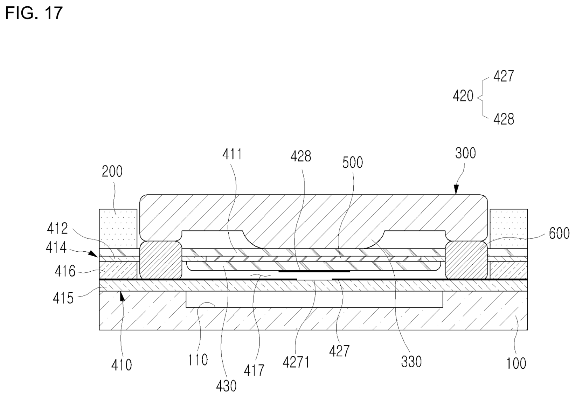

FIG. 17 is a cross-sectional view illustrating an ultra-slim haptic keyboard according to a fourth embodiment of the disclosure. In this embodiment, the positions of the driving part (500) and the protective layer part (430) may differ from those of the third embodiment described above, while other basic configurations may be identical to those of the third embodiment. For convenience of explanation, repetitive details will be omitted as much as possible.

As shown in FIG. 17, in the ultra-slim haptic keyboard according to this embodiment, the driving part (500) may be positioned at the lower part of the vibrating part (411) and integrated with the vibrating part (411).

Furthermore, the protective layer part (430) may be positioned at the lower part of the vibrating part (411) to cover the driving part (500).

Furthermore, the sensor part (420) may have a circuit electrode (427) and a connection electrode (428).

The circuit electrode (427) may be provided at the upper part of the second substrate layer (415) and extend into the spacing space (417), but may include a disconnected part (4271) that is partially unconnected from the spacing space (417).

Furthermore, the connection electrode (428) is provided at the lower part of the protective layer part (430) in the spacing space (417), and when the contact part (330) moves downward, it may electrically connect the disconnected part (4271).

Meanwhile, while the sensor part (420) was described above as a contact type including an electrode, it is not necessarily limited to this form; the sensor part (420) may also be implemented in a non-contact manner, such as a capacitive method.

The description of the disclosure is for illustrative purposes, and those skilled in the art will understand that it can be easily modified into other specific forms without changing the technical idea or essential features of the disclosure. Therefore, the embodiments described above should be understood as being exemplary in all respects and not limiting. For example, each component described as a single type may be implemented in a distributed manner, and likewise, components described as distributed may be implemented in a combined form.

The scope of the disclosure is indicated by the following claims, and all changes or modifications derived from the meaning and scope of the claims and their equivalent concepts should be interpreted as being included in the scope of the disclosure.

### [Explanation of reference numerals]

| | | | |
|---|---|---|---|
| 100: | lower frame part | 110: | cavity |
| 200: | upper frame part | 210: | open hole |
| 300: | key cap part | 400: | flexible circuit board part |
| 410: | flexible substrate part | 411: | vibrating part |
| 413: | open part | 420: | sensor part |
| 421,425,427: | circuit electrode | 422,426,428: | connection electrode |
| 423: | first circuit electrode | 424: | second circuit electrode |
| 430: | protective layer part | 500: | driving part |
| 600: | elastic support part | | |

## Claims

1. An ultra-slim haptic keyboard, comprising:
a lower frame part forming a lower body of the ultra-slim haptic keyboard;
an upper frame part provided at the upper side of the lower frame part to form an upper body of the ultra-slim haptic keyboard and having an open hole formed through the upper frame part at a position corresponding to a key;
a key cap part inserted into the open hole;
an elastic support part having a lower end part fixed to the upper part of the lower frame part and an upper end part provided to support the lower part of the key cap part and elastically support the key cap part upward;
a flexible circuit board part having a flexible substrate part provided between the lower frame part and the upper frame part, and a sensor part provided at the flexible substrate part to detect a pressing of the key cap part; and
a driving part provided at the flexible substrate part, and providing haptic feedback to a user by vibrating and transmitting vibration to the key cap part when the sensor part detects that the key cap part is pressed.

2. The ultra-slim haptic keyboard of claim 1, wherein the key cap part comprises:
a body part provided to cover the open hole;
a prevention piece formed protrudingly on a side surface of the body part and inserted into a catch groove formed recessedly on a side surface lower part of the open hole to prevent the body part from being separated from the upper side of the open hole; and
a contact part formed protrudingly at the lower center of the body part.

3. The ultra-slim haptic keyboard of claim 2, wherein the flexible substrate part comprises:
a vibrating part integrated with the driving part and vibrating up and down together with the driving part; and
an open part formed through opposite sides of the vibrating part to correspond to the open hole and induces the driving part and the vibrating part to vibrate up and down.

4. The ultra-slim haptic keyboard of claim 3, wherein the sensor part comprises:
a circuit electrode comprising a first electrode provided at the upper part of the vibrating part and a second electrode spaced apart from the first electrode and opposite to the first electrode; and
a connection electrode provided at the lower part of the contact part, and contacting, when the contact part moves downward, the first electrode and the second electrode to electrically connect the first electrode and the second electrode.

5. The ultra-slim haptic keyboard of claim 1, wherein the flexible substrate part comprises:
a vibrating part integrated with the driving part provided at the upper part, and vibrating up and down together with the driving part;
an open part formed through opposite sides of the vibrating part to correspond to the open hole and induces the driving part and the vibrating part to vibrate up and down; and
a protective layer part provided at the upper part of the driving part to cover the driving part and vibrating up and down together with the driving part and the vibrating part.

6. The ultra-slim haptic keyboard of claim 5, wherein the flexible substrate part comprises:
a first substrate layer above which the driving part is provided;
a second substrate layer provided spaced apart from the lower side of the first substrate layer; and
a spacer provided between the first substrate layer and the second substrate layer so that a gap between the first substrate layer and the second substrate layer is maintained, and a spacing space is formed between the first substrate layer and the second substrate layer at a vertically lower side of the driving part.

7. The ultra-slim haptic keyboard of claim 6, wherein the sensor part comprises:
a first circuit electrode provided at the lower part of the first substrate layer and extending into the spacing space; and
a second circuit electrode provided at the upper part of the second substrate layer, extending into the spacing space, and electrically connected to the first circuit electrode by contacting the first circuit electrode when the contact part moves downward.

8. The ultra-slim haptic keyboard of claim 6, wherein the sensor part comprises:
a circuit electrode provided at the upper part of the second substrate layer, extending into the spacing space, and having a disconnected part that is partially unconnected in the spacing space; and
a connection electrode provided at the lower part of the first substrate layer in the spacing space and electrically connecting the disconnected part when the contact part moves downward.

9. The ultra-slim haptic keyboard of claim 1, wherein the flexible substrate part comprises:
a vibrating part integrated with the driving part provided at the lower part, and vibrating up and down together with the driving part;
an open part formed through opposite sides of the vibrating part to correspond to the open hole and induces the driving part and the vibrating part to vibrate up and down; and
a protective layer part provided at the lower part of the vibrating part to cover the driving part and vibrate up and down together with the driving part and the vibrating part.

10. The ultra-slim haptic keyboard of claim 9, wherein the flexible substrate part comprises:
a first substrate layer having the driving part provided at the lower part;
a second substrate layer provided spaced apart from the lower side of the first substrate layer; and
a spacer provided between the first substrate layer and the second substrate layer so that a gap between the first substrate layer and the second substrate layer is maintained, and a spacing space is formed between the protective layer part and the second substrate layer at a vertically lower side of the driving part, and
the sensor part comprises:
a circuit electrode provided at the upper part of the second substrate layer, extending into the spacing space, and having a disconnected part that is partially unconnected in the spacing space; and
a connection electrode provided at the lower part of the protective layer part in the spacing space, and electrically connecting the disconnected part when the contact part moves downward.

11. The ultra-slim haptic keyboard of one of claims 3, 5, and 9, wherein when a voltage is applied, the driving part undergoes electrostrictive deformation, shrinking in the thickness direction and expanding in the plane direction, and when a voltage is not applied, it is restored to its initial shape.

12. The ultra-slim haptic keyboard of claim 11, wherein when a voltage is applied to the driving part and the driving part expands and deforms in the plane direction, the vibrating part is bent and deformed by the driving part that is expanded and deformed, and when a voltage is applied repeatedly, the driving part and the vibrating part vibrate while repeatedly undergoing expansion deformation and restoration to their initial shape.

13. The ultra-slim haptic keyboard of claim 11, wherein the driving part comprises:
a laminated part which has a flexible base material, driving electrode layers deposited on the base material, and a relaxor ferroelectric polymer (RFP) layer provided on the driving electrode layer, and in which the driving electrode layer and the relaxor ferroelectric polymer layer are alternately laminated; and
an interlayer electrical connection part which is provided at a part of the laminated part, electrically connecting the plurality of driving electrode layers, and to which a voltage is applied.

14. The ultra-slim haptic keyboard of one of claims 3, 5, and 9, wherein a cavity is formed recessedly at the upper part of the lower frame part to provide a safety space to prevent the driving part from being pressed and compressed when the vibrating part and the driving part are bent and deformed downward by being pressed by the key cap part.

15. The ultra-slim haptic keyboard of claim 14, wherein the cavity is formed with a width wider than the width of the vibrating part so that the vibrating part, which is bent and deformed downward, is inserted into the safety space without being caught by the lower frame.

16. The ultra-slim haptic keyboard of claim 14, wherein the elastic support part is provided at the open part.

17. The ultra-slim haptic keyboard of claim 16, wherein the maximum compression length of the elastic support part is less than the depth of the cavity.

18. The ultra-slim haptic keyboard of claim 2, wherein the cross-sectional shape of the contact part perpendicular to the width direction of the contact part is uniform, and the cross-sectional shape of the contact part perpendicular to the length direction of the contact part has a convex curve.
